Europäisches Patentamt

European Patent Office

Office européen des brevets

(19)

(11) Publication number: **0 138 545**
**B1**

# (12) EUROPEAN PATENT SPECIFICATION

(45) Date of publication of patent specification: **11.01.89**

(21) Application number: **84306845.3**

(22) Date of filing: **08.10.84**

(51) Int. Cl.⁴: **B 65 D 81/02,** B 65 D 81/24,
B 05 C 19/00

(54) Atmosphere control cushioning pad, method of manufacture, and use.

(30) Priority: **11.10.83 US 540930**

(43) Date of publication of application:
**24.04.85 Bulletin 85/17**

(45) Publication of the grant of the patent:
**11.01.89 Bulletin 89/02**

(84) Designated Contracting States:
**DE FR GB SE**

(56) References cited:
FR-A-2 467 795
US-A-1 682 177
US-A-3 409 444
US-A-4 079 152
US-A-4 087 002

(73) Proprietor: **MICHELSEN PACKAGING COMPANY**
**P.O. Box 89**
**Yakima, WA 98907 (US)**

(72) Inventor: **Jorgensen, Kevin D.**
**Rt. 3, Box 943**
**Yakima, WA 98907 (US)**
Inventor: **Smith, Willis B.**
**812 39th St.**
**Washougal, WA 98671 (US)**
Inventor: **Hobson, Philip J.**
**27104 NE 147 St.**
**Battle Ground, WA 98604 (US)**
Inventor: **Clevenger, David M.**
**10 South 66th Avenue**
**Yakima, WA 9809 (US)**

(74) Representative: **Hartley, David et al**
**c/o Withers & Rogers 4 Dyer's Buildings Holborn**
**London, EC1N 2JT (GB)**

Courier Press, Leamington Spa, England.

## Description

The present invention relates to a pad which is particularly suited for protecting produce which includes a layer of cushioning material to which a chemical composition has been added.

Many kinds of produce are fragile and are subject to damage in handling and shipping. In addition, produce has a limited lifetime during which it can be sold and used. In particular, fruits such as apples and pears are easily bruised and mature rapidly after they have been picked. The invention will, accordingly, be described herein with particular reference to fruits such as apples and pears although the invention is not limited to protection and preservation of fruit and may be used as well with respect to other produce.

Although some fruit is sold locally by the growers, the majority of fruit and other produce is shipped a substantial distance from the field to consumers. Two problems which arise as the result of the shipping and handling of pears and apples are bruising and overripening which may result in the food becoming unmarketable or marketable only at a lesser price. In addition, even though the fruit may arrive at a supermarket or other point of sale or use in good condition, the remaining saleable life of the fruit may be so short that it passes its prime level of ripeness before it can be sold.

One method of protecting apples and pears during shipment involves the use of formed cardboard trays which include recesses that conform generally to the fruit. A tray is placed in the bottom of a standard fruit carton and is loaded with a single layer of fruit. A cushioning pad is then placed on top of this layer to protect and immobilize the fruit. This cushioning pad may comprise a layer of fibrous cushioning material in a paper envelope. Successive layers of trays, fruit and pads are positioned atop the first layer until the box is full. Although this packaging method protects the fruit against bruising it does not slow the rate of maturation of the fruit.

Although it is desirable to have unprocessed fruit available during the entire year, the fruit season is fairly short, and apples and pears ripen and begin to spoil shortly after picking if they are maintained under ambient conditions. One method of extending the life of apples and pears has been the use of controlled atmosphere storage. Fruit in good condition is taken from the fields either in boxes as described above or in bins and is placed in a refrigerated storage chamber. The temperature of such storage chamber is gradually lowered to approximately 31°, the oxygen level is slowly reduced to between about 1 and 5% and the carbon dioxide level maintained below 1-2%. The fruit itself aids in achieving this low oxygen level since, even at reduced temperatures, it consumes oxygen and produces carbon dioxide and water vapor.

Apples and pears can be damaged by elevated levels of carbon dioxide. For example, pears may develop a pithy brown core which results from cellular damage if the levels of carbon dioxide rises excessively. Apples may also be damaged by excessive carbon dioxide, which damage is manifested as a browning of the skin. In addition, both fruits ripen more rapidly in the presence of elevated levels of carbon dioxide. As a result, after the fruit has been loaded into a controlled atmosphere chamber, a stack of bags of hydrated lime (calcium hydroxide) are frequently positioned in the chamber to aid in maintaining the carbon dioxide level at or below the desired percentage. During storage, however, the lime in the sacks may become glazed over as the outer layers are converted from calcium hydroxide to calcium bicarbonate. This greatly reduces the rate of uptake of carbon dioxide and thus reduces the effectiveness of this method of atmosphere control. In addition, the concentration of carbon dioxide within the bins and boxes may exceed that of the ambient atmosphere to which the sacks of lime are exposed due to poor circulation within such containers. Such storage is nevertheless reasonably effective in preserving the fruit for later use. It is thus not uncommon for apples to remain in controlled atmosphere storage for several months.

Notwithstanding the benefits of controlled atmosphere storage, the fruit continues to ripen rapidly between the time it is picked and the time at which controlled atmosphere storage conditions are actually achieved. Likewise, once the fruit is removed from controlled atmosphere storage the ripening process resumes. In fact, fruit that had been stored for extended periods under controlled atmosphere storage conditions will tend to reach its peak maturity very quickly after removal from storage. As a result, such storage, while permitting the availability of fruit year round, actually shortens the effective marketable life of the fruit during which it can be transported and stored at ambient temperatures.

FR-A-2,467,795 discloses a cushioning pad for protecting produce comprising a gas-permeable envelope containing cushioning material and a chemical composition dispersed within said cushioning material, said composition being capable of interacting with the atmosphere outside said envelope. This cushioning pad generates a bactericide gas such as $SO_2$ during use.

FR-A-2,467,795 also discloses a method of making a cushioning pad for protecting produce comprising the steps of forming a layer of cushioning material, dispersing a chemical composition in said cushioning material and enclosing said chemical composition and layer of cushioning material within a gas-permeable envelope, said chemical composition being capable of interacting with the atmosphere outside said envelope.

It has now been discovered that the storage life of produce such as apples and pears can be extended by controlling the concentration of carbon dioxide within the shipping boxes or bins. Another factor that effects the rate of maturation of fruit is the concentration of ethylene to which the fruit is exposed. During the process of maturing, the fruit also gives off increasing quantities of ethylene gas. Ethylene given off by one piece of fruit stimulates the ripening of all fruit exposed to it. Accordingly, the rate of maturation can also be slowed by removing ethylene from the containers in which the produce is stored as quickly as possible.

In one aspect, the invention provides a cushioning pad characterised in that said chemical composition is a solid particulate material which is capable of absorbing carbon dioxide and/or ethylene from said atmosphere, said cushioning material is a fibrous material and solid particles of said chemical composition are dispersed within voids in said fibrous cushioning material.

In another aspect, the invention provides a method characterised in that said chemical composition is a solid particulate material which is capable of absorbing carbon dioxide and/or ethylene from said atmosphere, said cushioning material is a fibrous material and solid particles of said chemical composition are dispersed within voids in said fibrous cushioning material.

In addition, the food or other object may be further protected by providing a cushioning pad which swells by absorption of moisture to further immobilise it.

The invention also provides a package comprising at least one cushioning pad in contact with a layer of produce as claimed in claims 6 and 7. The use of the cushioning pad or package to inhibit premature ripening of produce is claimed in claim 10. The envelope, may be of paper or other material which permits the pad to breathe. It has been found that the chemical composition may be added to the cushioning material either prior to forming it into a batt or by depositing it onto the batt before it is enclosed by the envelope. The edges of the covering material may then be sealed around the batt to form the envelope and the batt is immobilised within this envelope. Testing has demonstrated that the uptake of carbon dioxide and water vapour by pads enclosed in conventional envelope forming paper is quite adequate to protect fruit such as apples and pears. If desired, however, the permeation of the envelope by carbon dioxide, ethylene or water vapour may be adjusted by using covering material of greater or lesser permeability or by alteration of the thickness of the mastic which confines the batt in the envelope.

One chemical which may be advantageously added to the cushioning material is calcium hydroxide also referred to as hydrated lime. Calcium hydroxide absorbs carbon dioxide by forming calcium bicarbonate. The disbursion of the hydrated lime or other such chemical throughout the envelope prevents the formation of a crust of inactive calcium bicarbonate which otherwise might block the rapid and complete removal of carbon dioxide from the interior of the box. In addition, it has been found that the spreading of calcium hydroxide across a larger area dramatically increases the rate of uptake of carbon dioxide, providing maximum protection to the produce. The inventor has discovered that such dispersion of the calcium hydroxide is achieved by mixing it with or spreading it on the layer of cushioning material, used to form a cushioning pad.

Accelerated maturation of the fruit can also be prevented by elimination of ethylene gas from the ambient atmosphere. Potassium permanganate is one chemical which can be added to the layer of cushioning material to oxidize the ethylene gas. Preferably the potassium permanganate is used in conjunction with alumina, which acts as a carrier.

It has also been discovered that the fruit or other article can be further protected by addition of a hygroscopic chemical such as calcium chloride to the cushioning material. When calcium chloride is added to a cushioning material such as mascerated paper, it withdraws moisture from the atmosphere causing the material to swell. This swelling of the fibrous layer expends the pad and holds the fruit or other article more firmly in place to prevent mechanical damage. Other absorptive materials may also be added to the mascerated paper material.

Since cushioning pads of the character described are manufactured in a continuous manufacturing process, an accurate and effective system and mechanism is needed to insure controlled dispensing of chemical substances into the batt of cushioning material before the gas permeable envelope is closed. The pads are preferably manufactured in a continuous process by forming a layer or ribbon of cushioning material dividing the ribbon into a plurality of batts which are then segmented into discrete units prior to being enclosed in the paper envelope. This is done on a continuous conveyor system.

In one apparatus for carrying out the method of the present invention a feeding and dispensing mechanism is provided for conveying and feeding the material to be dispensed in timed sequence with the continuous pad forming conveyor line. The material is dispensed on a preselected portion only of each batt with flow interruptions between the spaced batts for efficient use of material and exact placement of material for best end results. In addition, provision is made for the metering of material as it is dispensed so as to control the exact amount of material deposited on the preselected area of the moving batt according to the particular function of the material being incorporated into the batt. The mechanism is so constructed as to handle the particulate material in a manner to prevent spillage and accumulation of excess material which in some cases may be caustic and harmful to the conveyor system or manufacturing environment.

To accomplish these purposes, a supply of particulate material is maintained remote from the batt forming conveyor system and is supplied to a holding column by means of a closed auger conveyor system. In one apparatus, the holding column is vertical and the material is maintained in supply by means of high and low level limit switches which insure that the ready supply of particulate material is maintained in conformance with the dispensing requirements which are in turn controlled by the speed of the pad forming conveyor system. A second apparatus utilises an inclined chute and hopper which act as a holding column controlled by high and low level limit switches in a similar manner. Since the original layer or ribbon of fibrous material is initially divided longitudinally and cut transversely to form a plurality of rows of cushion pads moving on the conveyor, a plurality of dispensing hoppers or bins, one for each line of moving batts may be provided. The final loading means for the hoppers, the mixing paddle for each hopper and an unloading or dispensing conveyor belt for each hopper is driven by the conveyor drive means of the pad forming machine. In this manner, the rate of dispensing is made a function of the pad forming machine.

In order to control the dispensing or spreading of the particulate material to a predetermined portion or all of the pad surface, gating means for each dispenser may be controlled by a timing switch means driven by the main conveyor drive and is settable to open and close the dispenser gating means and halt the dispenser conveyors at proper timed intervals which depend upon the pad lengths and the speed of the main conveyor.

Preferred embodiments are described below by way of example only with reference to Figures 1 to 12 of the accompanying drawings, of which:

Figure 1 is a perspective view of a cushioning pad according to the present invention with parts broken away;

Figure 2 is a perspective view of a loaded fruit shipping box with parts broken away to show the use of cushioning pads;

Figure 3 is a perspective view of an apparatus for making cushioning pads;

Figure 4 is a prospective view of the feeding and dispensing mechanism mounted in conjunction with the pad forming conveyor system;

Figure 5 is a side elevational view of a feeder dispenser loading conveyor;

Figure 6 is a plan view of a hopper section of the dispensing machine;

Figure 7 is a side elevational view of a hopper section and its dispensing conveyor for the particulate material;

Figure 8 is an end elevation of the apparatus shown in Figure 7 also showing the feeder dispenser loader conveyor in position on the hopper;

Figure 9 is a functional diagram of the timing switch control mechanism;

Figure 10 is a side elevational view of the modified holding column which comprises an inclined chute and hopper mounted on the dispensing hoppers; and

Figure 11 is a sectional view along lines 11-11 of Figure 10 illustrating the hopper portion of the holding column with its unloading paddle wheel and mixing paddles; and

Figure 12 is a sectional view along lines 12-12 of Figure 11 illustrating the drive arrangement for the mixing paddles.

The cushioning pad of the present invention is especially useful in connection with the protecting of produce for storage or packing. Although many kinds of produce are fragile and subject to damage and deterioration during handling, storage and shipping, fruits such as apples and pears are easily bruised and mature rapidly after picking. The invention will, accordingly, be described herein without limitation of the invention thereto. As will be apparent to those skilled in the art, the pad of the present invention may be used as well with respect to other produce.

The chemical composition may be added to the layer of cushioning material at either of two stages. One method of adding the chemical composition is to mix it with the cushioning material prior to forming of the material into a batt. The chemical composition may also be applied by depositing it onto the cushioning material before it is enclosed in the envelope 12. Either method results in the disbursing of the chemical composition in the layer of cushioning material 11, providing a greatly increased surface area of the chemical composition for withdrawing the gases from the ambient atmosphere.

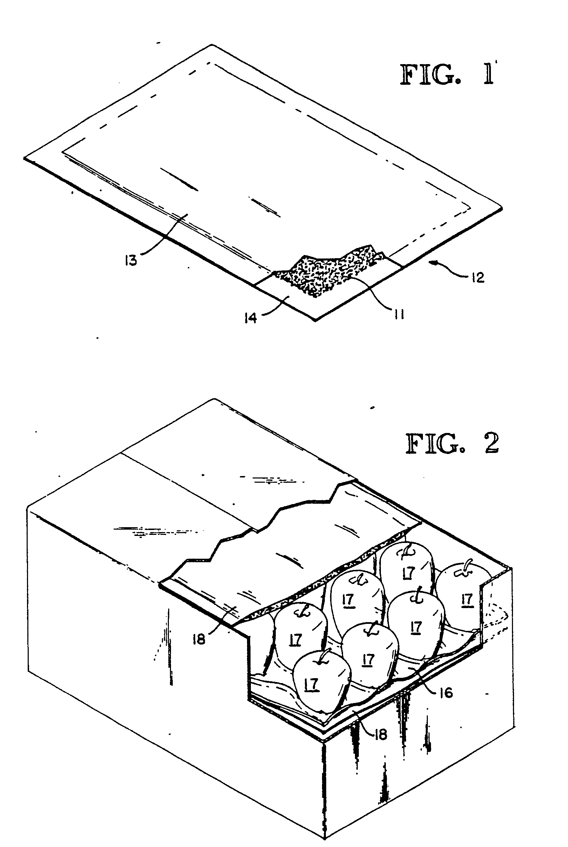

As illustrated in Figure 1, the pad of the present invention comprises a layer of cushioning material 11 enclosed within an envelope 12. A chemical composition which interacts with the ambient atmosphere is added to the cushioning material as described below. Any of a variety of known fibrous cushioning materials which are compatible with the chemical composition may be used. Preferably, however, the layer of cushioning material is made of mascerated paper. The envelope 12 which contains the cushioning material is preferably formed of an upper sheet 13 and lower sheet 14. The layer of cushioning material 11 is immobilised within the envelope by glue applied to the interior surface of the envelope. The upper and lower sheets 13, 14 are of greater dimensions than the layer of cushioning material 11 and are sealed together by the glue along their edges.

The pad of the present invention may be used in packaging fruit such as applies or pears in boxes. Such fruit is generally packaged in the industry by providing successive layers of fruit and packaging material in the box. As illustrated in Figure 2, each layer consists of a moulded tray 16 which is formed to include a plurality of recesses for receiving the fruit. After fruit has been loaded onto this tray, a cushioning pad 18 is placed atop the fruit. Successive layers of trays 16, fruit 17 and pads 18 are placed in the box until it is full. One or more pads according to the present invention may be used depending on the results desired. For example, pads containing calcium chloride may be used atop each layer of fruit in the box in order to immobilize the fruit to prevent mechanical damage. In addition one or more of the pads may contain chemicals such as calcium hydroxide, potassium permanganate and alumina for withdrawing carbon dioxide and ethylene gas from the ambient atmosphere in the box.

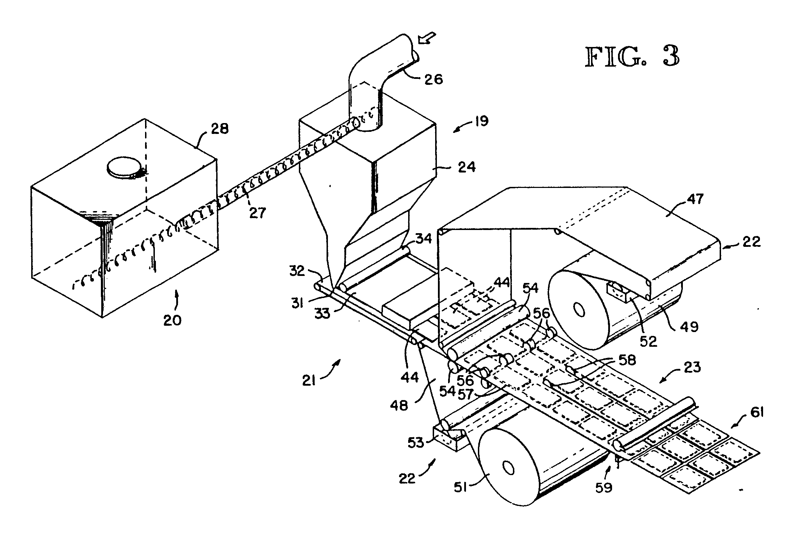

As illustrated in Fig. 3, according to one embodiment of the present invention the pads may be made by an apparatus comprising a mechanism for forming a continuous layer of cushioning material 19, a feed mechanism 20 for supplying the chemical composition for addition to the cushioning material, a mechanism 21 for dividing the continuous layer of cushioning material into a plurality of batts of desired dimension, a supply mechanism 22 for supplying the material to form envelopes for the batts, and a cutter and roller mechanism 23 for segmenting a continuous sheet of cushioning pads into discreet pads.

The mechanism 19 which forms the continuous sheet of cushioning material includes a hopper 24 which receives cushioning material, An auger feed mechanism 27 is used to supply the chemical composition from the chemical bin 28 to the hopper 24 for mixing with the cushioning material. The auger 27 is driven to supply chemicals to the bin only when cushioning material is being dispensed from the hopper 24 so that the concentration of the chemical constituent remains uniform in the pads produced. Mixing of the cushioning material and chemical constituent is accomplished within the hopper 24. The cushioning material is agitated in the hopper and this action aids in mixing the chemical composition with the cushioning material.

The bottom 31 of the hopper 24 is open and is positioned a short distance above a continuous belt 32. Material flows through this aperture when the belt 32 is moving and is compressed into a continuous batt 33 by a roller 34. The belt then conducts this continuous sheet 33 past the cutting mechanism 21 which segregates the cushioning material into discrete pads 44. Although any of a variety of prior art devices may be used to divide the continuous sheet 33 into discrete batts 44. In one mechanism which may be employed, the inlet of a blower may be disposed at one side of the conveyor 32 and a source of air under pressure may be disposed at the other side thereof to produce a localized transverse connection current of air which subdivides the sheet 34 into discrete batt portions 44.

It is not essential that the cutting mechanism 21 move as a unit with the conveyor 32 and sheet 33 in the course of removing the batt segment. Rather, the system may be operated intermittently as the conveyor 32 advances.

The discrete batts 44 are then fed off the belt 32 and between sheets of envelope material 47, 48 fed from continuous rolls 49, 51. A layer of adhesive is applied to each sheet 47, 48 along the facing surfaces between which the batts 44 are inserted. The two opposing sheets of paper pass between the press rollers 54 which press the sheets 47, 48 together to form a single sheet of padding material 57. Slitter and cutter mechanisms 58, 59 are provided to divide this sheet 57 into discreet pads 61.

In practice, the cushioning material is introduced into the hopper. A chemical composition is added to the cushioning material by means of an auger 27 which conveys it from a bin 28. The auger is actuated only when the conveyor 32 is running so that an excessive quantity of the chemical constituent is not added to the cushioning material 33 containing the chemical composition deposited on the conveyor 32 and is carried past the cutting mechanism 21 which divides it into discrete batts 44. These batts 44 are then fed off the conveyor 32 onto the lower sheet of envelope material 48. This sheet 48 is unwound from a supply roll 51 and passed over a glue applicator 53 prior to receiving the batt and is thus coated with glue. The upper sheet of envelope material 47 is then fed from the supply roll 49 and over the glue applicator 52 and is applied to the upper surface of the batts 44. The sheets 48, 49 are passed beneath rollers 54, 56 which seal them together about the periphery of the batts 44 into a continuous sheet 57 which is then divided into discrete pads 61 by the slitter and cutter mechanisms 58, 59.

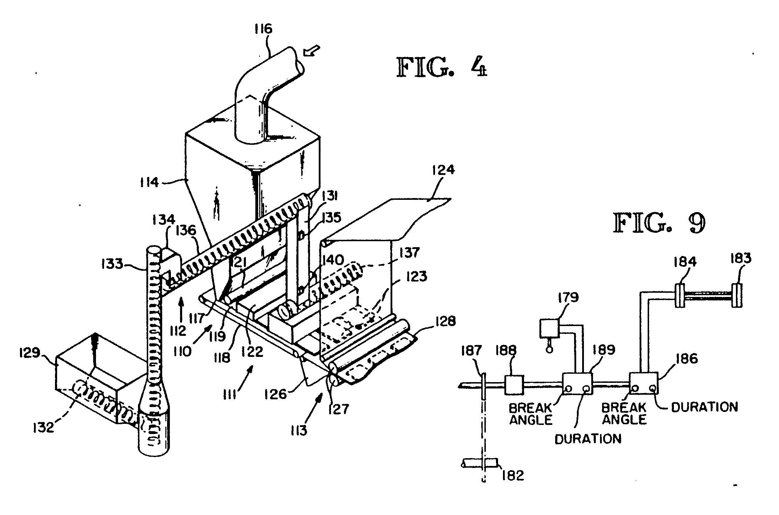

Figs. 4-12, illustrate a second form of the mechanism for dispersing the chemical within the pads whereby the chemical is deposited onto the batts after they are formed and before they are enclosed in the pad envelope. As illustrated in Fig. 4, the apparatus for forming a continuous layer or ribbon of fibrous cushion material is indicated generally at 110, a particulate material feeding and dispensing mechanism is indicated generally at 111, a closed conveyor supply system 112 is provided for the particulate material, and a supply mechanism 113 supplies the sheet material to form envelopes for the batts once they have been prepared and supplied with a particulate material by the feeding and dispensing mechanism.

The mechanism 110 which forms a continuous sheet or ribbon of fibrous cushioning material includes a hopper 114 for receiving the fibrous cushioning material via an inlet conduit 116 from a supply source. As aforementioned, a common form of fibrous cushioning material used in such industries as fruit packing may comprise such material as macerated paper. The cushioning material is fed from the hopper 114 which has an open-bottomed end 117 positioned a short distance above a continuous belt 118. The cushioning material is caused to flow through the aperture when the belt 118 is moving and is compressed into a continuous fibrous layer or ribbon 119 by a roller 121. The belt 118 then conducts the continuous layer or ribbon 119 past a cutting mechanism 122 which segregates the cushioning material both longitudinally and transversely into discrete batts 123. The batt forming mechanism 122 may either be of the type which operates to allow the conveyor continuous movement or the system may be operated intermittently as the conveyor 118 advances.

The discrete batts 123 after passing the particulate material feeding and dispensing mechanism 111 are fed off of the belt 118 in between sheets of envelope material 124, 126 which may be fed from supply rollers, not shown. As previously described, the envelope material may be of a gas permeable paper to permit an interchange between the particulate material included in the batts with the ambient atmosphere. Normally, a layer of adhesive is applied to each sheet 124, 126 along the interfacing surfaces between which the batts 123 are enclosed. The two opposing sheets of envelope material are passed between the press rollers 127 which press the sheets together to form a single ribbon of cushion pads 128. As will be understood by those familiar with the art, slitter and cutter mechanisms, not shown, may be provided downline from the rollers 127 to divide the ribbon 128 into discrete pads which comprise the batt of cushion material within its gas permeable paper envelope.

The feeder and dispenser mechanism and system as illustrated in the embodiment of Figures 4 - 9 includes the feeding and dispensing mechanism 111 and the supply conveyor system 112. A supply hopper 129 is maintained remote from the main conveyor system with particulate material from the hopper 129 being supplied to a hollow vertical holding column 131 by means of the closed auger system illustrated. This auger conveyor system includes a first horizontal infeed auger 132 for unloading the particulate material from the hopper 129 and supplying the same to the vertical lift auger conveyor 133. The vertical lift conveyor 133 delivers the material to a free-fall drop tube 134 which allows the material to be dumped onto the horizontal cross-feed screw conveyor 136. The conveyor 136 delivers the material to the vertical holding column 131 to provide a constant supply of particulate material to the feeder dispenser loading conveyor 137 presently to be described in more detail. The conveyors 132, 133 and 136 may all be conventional screw type conveyors with the capacities and speeds of the different conveyors being chosen so as to obtain a smooth flow of material when activated.

Each conveyor 132, 133 and 136 may be provided with its own electric drive motor with a control system for actuating and deactuating the motors. In order to prevent material jams on start-up, the several conveyors will be energized in sequence for instance, the top cross-feed conveyor 136 will be energized first, five to ten seconds later the vertical conveyor 133 will start and five to ten seconds after the vertical conveyor starts, the infeed conveyor 132 will be energized. The conveyors, of course, would be stopped in reverse sequence from that described. An override safety switch will normally be provided to instantly kill the power in the system to immediately halt all conveyors if necessary.

In order to maintain a constant supply of particulate material in the holding column 131, high and low level control switches 135 and 140 respectively are provided on the column 131 for controlling the conveyors 132, 133 and 136 automatically. The switches 135 and 140 may be any well known form of limit level switch actuated by the level of the particulate material in the column. The object, of course, being to maintain a constant supply of the particulate material to the feeder dispenser loading conveyor 137. If the material in the column 131 builds up to the high-level switch, the conveyors will be halted in reverse order as previously described. When the material level in the column 131 drops to expose the low-level switch 140, the conveyors will be started automatically as described above. Thus, even if the power is turned on for the conveyors manually and the high level switch 135 is activated, the conveyors will not start until the material is removed so that the low-level switch is activated. If the high-level switch is not activated the conveyors will start in sequence when the power is turned on.

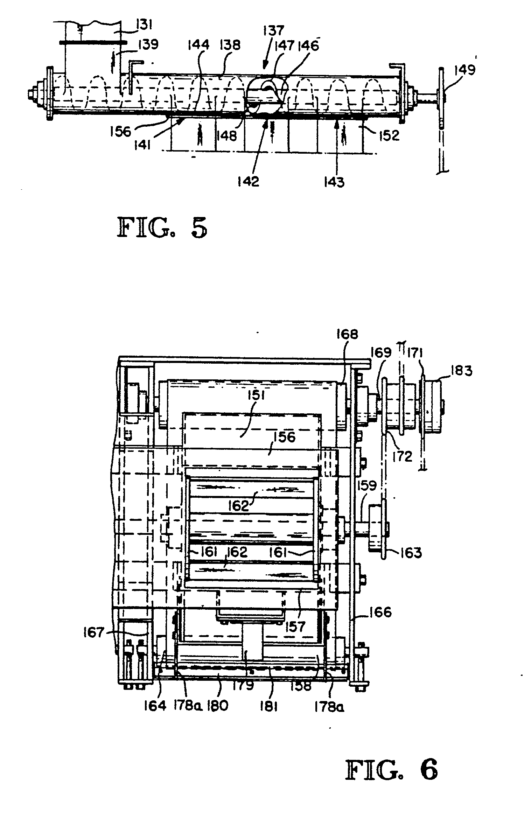

As seen most clearly in Fig. 4, the particulate material feeding and dispensing mechanism 111 spans the width of the conveyor 118 so as to dispense particulate material onto each line of discrete batts 123 as they pass therebeneath. As will presently be described the mechanism 111 comprises three substantially identical units with each unit including its own hopper, mixer paddle or agitator, dispensing conveyor and metering gate. The three sections of the dispenser are supplied with particulate material by the single feeder dispenser loading conveyor 137. The details of the conveyor 137 are shown in Fig. 5. The conveyor 137 comprises the cylindrical housing 138 which has the inlet 139 for receiving the holding column 131 and includes three outlet openings 141-143 in a bottom flange 144 which mates with the openings in the three hopper sections illustrated in the feeding and dispensing mechanism. As seen in Fig. 5 the conveyor comprises a rotary shaft 146 which mounts the helical ribbon 147 by means of the spokes 148. The ribbon type screw conveyor provides a non positive feed to prevent packing of the material should it build up in the conveyor housing. The shaft 146 is driven by chain and sprocket connection 149 from the drive means for the main conveyor 118 through the drive shaft for the dispenser belt conveyor presently to be described. The conveyor 137 will thus keep all three hopper units full at all times during operation of the main conveyor system.

As previously pointed out, the feeding and dispensing mechanism in the present embodiment comprises three identical sections for dispensing material onto the three lines of moving batts. Thus only one section will be described in detail with the understanding that the feeding and dispensing unit for each line of moving batts will be identical. As seen in Figs. 6-8, the hopper section is formed by rear wall 151, front wall 152, and the side walls 153 and 154. A top plate 156 is mounted on the side walls and includes the opening 157, which is matched up with the opening 143 in the flange 144 of the conveyor 137. The bottom of the hopper section is open to the upper surface of a continuous belt conveyor 158 which dispenses the particulate material from the hopper section. In order to prevent the particulate material from packing excessively in the hopper section, each section is provided with a paddle wheel system mounted on a rotary shaft 159. The paddle wheel comprises two radially extending arms 161 on opposite ends of the shaft within each hopper section for mounting the paddles 162. The shaft 159 is driven by sprocket wheel 163 in a manner to be presently described.

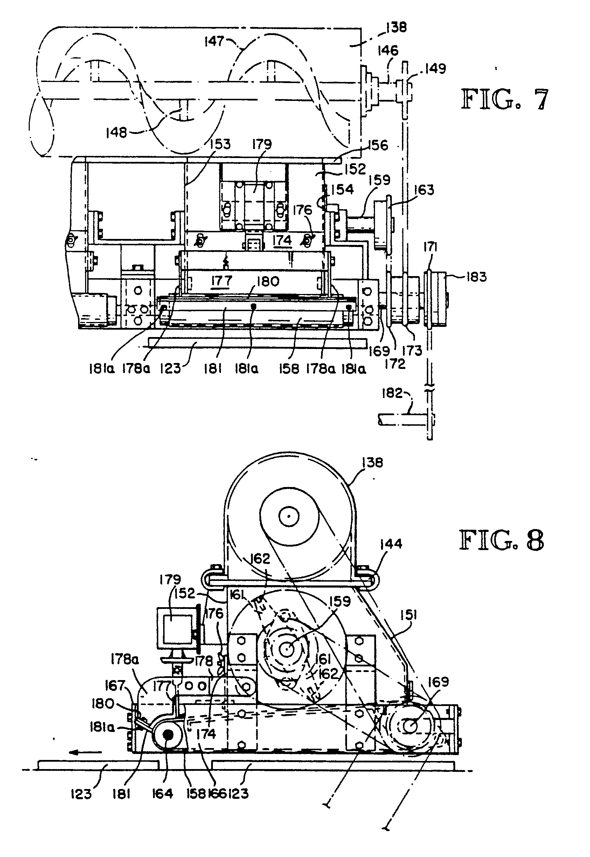

The dispenser conveyor belt 158 is trained about the idler roller 164 mounted in the two side frame members 166, 167 with appropriate means being provided as illustrated for tightening the belt. A drive roller 168 mounted on the drive shaft 169 is also mounted on the side frame 166, 167 and is driven by the sprocket 171 by means of a chain drive connected to the main conveyor drive means as illustrated in Fig. 7. A second sprocket 172 may also be provided on the shaft 169 for providing a chain drive to the sprocket 163 for the paddle wheel drive shaft 159. Thus the drive for both the dispenser conveyor 158 and the paddle mixer shaft 159 are derived from the main conveyor drive means. The dispenser belt and the mixing paddle may therefore be driven at the same speed as the batt below and will speed up or slow down as the machine speed is changed. The feeder dispenser conveyor shaft 146 is driven off of the shaft 169 via the sprocket 173 and the chain and sprocket 149 previously described.

Means for metering the amount of particulate material removed from the hoppers by the conveyor belt 158 is provided by the metering gate 174 provided in the lower end of the hopper wall 152. The gate may be provided with appropriate guides for vertical sliding and the vertical position of the gate may be manually set by the thumbscrews 176 on its outside face. The proximity of the bottom edge of the gate 174 will determine the thickness of the layer of particulate material removed from the hopper on the traveling belt 158 and thus the amount of material deposited on each moving pad 123. A solenoid operating spacing gate 177 is mounted and located near the outer end of the conveyor 158 by means of the pivoted arms 178 mounted to the bin frame as illustrated most clearly in Fig. 8. The solenoid 179 is connected to a crossbar extending between the arms 178 as illustrated, for the purpose of raising and lowering the gate to prevent flow or escape of particulate material when the belt is momentarily halted to prevent dispensing between the moving batts which are traveling in the direction of the arrow as illustrated in Fig. 8. Each pivoted arm 178 is provided with an extension 178a which extends outwardly and downwardly to a position in front of the forward end of the belt 158. These extensions may either be made integral with the arms 178 or conveniently bolted or otherwise detachably mounted thereto. A cross bar 180 extends between the outer ends of the extensions 178a and serves to mount a wiper blade 181 which extends the full width of the belt 158. The blade 181 is adjustably fixed to the cross bar 180 by means of the bolts 181a to mate with the surface of the belt 158. The blade 181 is thus positioned to be moved into contact with the belt surface concurrently with the blade 177 and functions to prevent material on the belt 158 beyond the gate 177 from flowing over the rounded end of the belt onto the moving batts. The material is dispensed only after the predetermined dwell between passage of batts and the raising of gate 177.

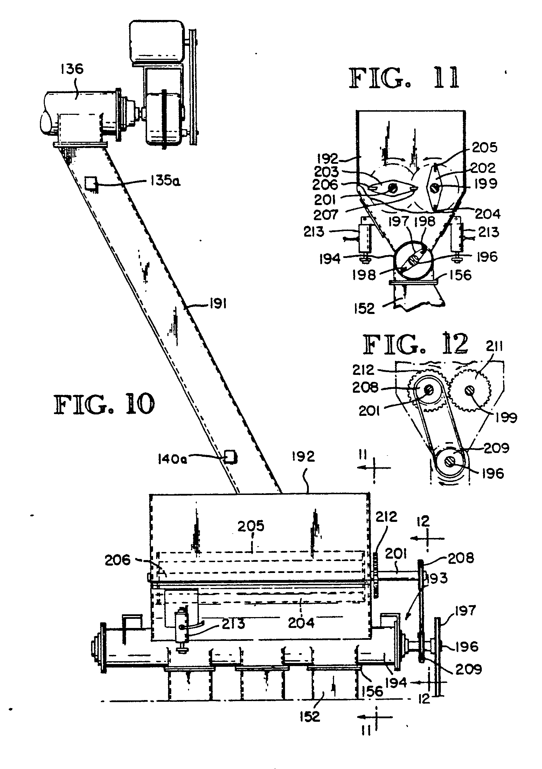

Figs. 10 and 11 illustrate a second embodiment wherein the vertical holding columns 131 and feeder dispenser conveyor 137, as shown in the Fig. 4-9 of the embodiment, are replaced by an inclined chute 191 with hopper 192 and a paddle wheel unloader 193. As shown in Fig. 10, the inclined chute 191 receives particulate material from the cross feed conveyor 136 much in the same manner as the vertical column 131. The material flows by gravity to the hopper 192 mounted on the cylindrical housing 194 of the paddle wheel unloader 193. As seen most clearly in Fig. 11, the housing 194 may be mounted on the top plate 156 of the dispenser bins with openings (not shown) matched with the bin openings for delivering particulate material to the individual bins to be dispensed as previously described. The unloader 193 further includes a central shaft 96 provided with a drive sprocket 197 which is driven by the sprocket 173 as previously described for the auger shaft 146 of the feeder dispenser conveyor 137. The shaft 196 is provided with cross arms 197 for mounting the paddles 198 which serve to insure flow of particulate material from the hopper 192 to the dispenser bins.

High and low level control switches 135a and 140a are provided in the chute 191 and function in the same manner as the limit switches 135 and 140 in the vertical column 131 to maintain a constant supply of particulate material to the unloader paddle wheel 197-198. The chute 191 has particular application when working with extremely fine particle material such as powdered lime for instance. It has been found that material of this character aerates excessively when allowed to drop and billow into a vertical holding column. The result of this excessive aeration is to change the flow characteristics of the material drastically such that it flows almost in the form of a liquid causing a loss of control when dispensed by the belt conveyors 158. In practice the chute has been inclined at an approximate 60° angle with good results. This angle may of course be varied depending on the characteristics of the material being handled.

In order to insure even flow of the material from the hopper 192 and to prevent packing, a pair of intermeshing mixer paddle wheels are provided. The paddle wheels are mounted on counter rotating shafts 199 and 201 which may be suitably journaled in the hopper end walls. The paddle wheels comprise the cross arms 202 and 203, fixed to shafts 199 and 201 respectively, and the paddles 204-207 carried thereby. As illustrated in Fig. 11, the cross arms 202 and 203 may be offset 90° so as to intermesh when oppositely rotated. Drive for the shafts 199 and 201 is provided by the shaft 196. To this end a sprocket 208 is mounted on shaft 201 and is chain driven by sprocket 209 mounted on the shaft 196. The shaft 199 is rotated in the opposite direction from shaft 201 by means of a gear 211 meshed with a gear 212 on shaft 201.

To further aid in constant even flow of material through the hopper, the hopper bottom walls may be equipped with mechanical vibrator units 213. The units may be of any commercially available type well known in the art such as the pneumatic piston type illustrated or an electrically driven eccentric mass type. The vibrator units may be mounted to the outside surface of the hopper walls as illustrated in Figs. 10 and 11 in any suitable locations. In the embodiment shown, one unit is mounted to each hopper wall at opposite ends of the hopper.

Operation

The conveyor system for maintaining a supply of particulate material in the holding column 131 is first actuated through a master switch, not shown, for energizing the system. As aforedescribed, the conveyors may be sequenced such that the cross feed conveyor 136 starts first and the vertical lift conveyor 133 and the infeed auger 132 follow respectively in five to ten second intervals. In this manner, material jams may be avoided. When the conveyors are halted for any reason, the reverse of this sequence will take place. In order to maintain an adequate supply of material in column 131, the high and low level switches 135 and 140 respectively will control the conveyors automatically once the system is energized. Thus if the material level in the column 131 is below the low level switch 138, the conveyor system will be energized. Once the material builds up to the high level switch 137, the conveyor system will be de-energized and the conveyors will stop in reverse order. If the system is energized manually, of course, the conveyors will not start if the high level switch is actuated but will start only when the material drops so as to actuate the low level switch. With the particulate material supply system in operation, the feeding and dispensing mechanism is ready for operation in conjunction with the main pad forming machine conveyor system. As illustrated in Figs. 7 and 8, the drive shafts 169, 159 and 146 for the material feeder belt 158, the mixer paddle wheel 161-162 and the conveyor 137 respectively may all receive their drive from the main machine drive shaft 182 through the chain and sprocket arrangement illustrated. With this arrangement the material feeder belt 158 may be driven at the same speed as the batts on the conveyor 118 and will speed up or slow down if the main machine speed is changed.

Interruptions to the drive of the feeder belt drive shaft 169 may be accomplished with clutch means such as a commercially available pneumatic clutch 183. Referring to Fig. 9, the pneumatic clutch is controlled by solenoid valve 184 under the control of the programmable cam actuated timing switch means 186 driven by the main machine drive shaft 182 through the chain and sprocket drive 187 illustrated. The programmable cam switch means may be of any known type, for instance that manufactured by Candy Manufacturing Co., Inc., 626 Grove St., Evanston, Illinois 60201. The switch may be timed with the speed of travel and length of the batts through a variable speed gear box 188. The switch has a settable brake angle position and a duration setting, whereby the solenoid valve 184 for the pneumatic clutch 183 will be controlled to drive the shaft 169 of the belt 158 during the passage of a batt and to declutch the belt drive shaft for a period coincident with the spacing between the moving batts. In this manner, the belt 158 may be operated to dispense a strip of particulate material on each moving batt from 0 to any length desired with interruptions of dispensing between batts as required.

A second cam actuated timing switch 189 is used to de-energize the solenoid 179 slightly before the belt 58 is stopped to drop the gate 177 to block movement of the material on the belt surface to prevent escape of the material during the interrupt period when the belt is declutched. The wiper blade 181 is also moved into contact with the belt to prevent escape of material from the end of the belt. In this manner a precise control of the stop and start point of the spreading of particulate material may be accomplished. After a predetermined time period controlled by the duration setting of the switch 189, the solenoid 179 will again be energized. The stop or raised position of the gate 177 above the belt 158 when the solenoid is energized is set to meter the amount of material dispensed. Thus the spread of material on start up of the belt 158 will not be effected by any slight amount of build up of material behind the gate 177 that may occur. Likewise the raised position of the wiper blade 181 will meter the dispensing of any accumulated material.

It will be understood, of course, that, except for the prevention of excess aeration of finely powdered materials, the embodiment of Figs. 10 and 11 operates in the same manner as that described for the Figs. 4-9 embodiment. The gentle slope provided by the chute 191 allows the material to descend to the hopper 192 without entrapping excess air. The use of the hopper 192 with its mixing paddle wheels and unloading paddles ensures an even constant flow of material to the dispersion bins. The vibrator units prevent any adherence of material to the hopper walls. With the mechanism and system of the present invention, it is possible to deposit a predetermined metered quantity of particulate material onto the surface of moving batts 123. The dispensing may be precisely controlled to effect the entire surface or a predetermined portion only of the surface of the batts as controlled by the timing switches. The spread is also positively interrupted between the batts to avoid any interference of the particulate material with the pad conveyor system or to interfere with the bond between the contacting surfaces of the envelope material. As the treated batts move past the dispensing mechanism 111, the upper and lower cover sheets are brought into contact to form the envelope containing the treated batt. The sheet of pads comprising the envelope enclosed batts are then subsequently separated into individual pads for use.

The disbursion of the chemical composition in the pad is highly advantageous. The greatly expanded surface area of the chemical resulting from its disbursion within the pad provides rapid uptake of the targeted component of the atmosphere. For example, the inventor has determined that the rate at which carbon dioxide is withdrawn from the atmosphere by reaction with calcium hydroxide is greatly increased when the chemical is so disbursed. In testing, it was found that when calcium hydroxide was placed in a test chamber and confined to a 76.2 x 76.2 mm (3″ x 3″) area, 150 minutes were required to withdraw all carbon dioxide from the chamber. When the area over which the calcium hydroxide was disbursed was increased to 228.6 x 228.6 mm (9″ x 9″) however, a 10-fold decrease in the amount of time required to withdrawn carbon dioxide from the chamber resulted. In the latter case, the more widely disbursed calcium hydroxide completed the task of carbon dioxide withdrawal in only 15 minutes. Rapid uptake of the carbon dioxide or other gas is further augmented by disbursion of the chemical in the cushioning material since this increases the surface area of the chemical available for reacting with this gas.

The disbursing of the chemical in the layer of cushioning material 11 also prevents waste of the chemical constituent by promoting complete use of the chemical constituent. For example, as set forth above, the chemical formed by reaction between carbon dioxide and calcium hydroxide can form a glazed layer which impedes uptake of carbon dioxide by the calcium hydroxide behind this glazed layer. By disbursing the chemical in the layer of cushioning material, however, the formation of such a barrier layer is greatly reduced or eliminated. Likewise, the reaction between bulk potassium permanganate and ethylene results in the formation of manganese dioxide which could slow the removal of ethylene gas.

A third advantage of the pad of the present invention is that the envelope prevents contact between the chemical constituent and the fruit or other article and permit multiple pads bearing the chemicals to be spaced throughout a shipping box, as illustrated in Fig. 2. In the case of a calcium hydroxide bearing pad, this ensures that all carbon dioxide is promptly and completely removed from all areas of the box.

Cushioning pads containing calcium chloride or other hygroscopic chemicals are also improved by dispersion of the chemicals throughout the cushioning layer 11. This promotes uniform expansion of the cushioning layer 11 and does not overwet the cushioning layer to the point where it becomes sodden.

Different kinds of chemical compositions may be used to make a pad according to the present invention. As set forth above, excessive carbon dioxide concentration can adversely affect produce such as applies and peras by damaging or causing discolouration of the fruit and by accelerating the ripening rate. Chemical compositions such as calcium hydroxide which absorb atmospheric carbon dioxide may advantageously be included as part or all of the chemical constituent of the pad. As set forth above, produce such as applies or pears generate carbon dioxide as they ripen. When such harvested produce is packaged or stored in boxes or bins, the level of carbon dioxide in such container may increase by as much as 1 or 2% per day. In fact, in a test performed using pears removed from controlled atmosphere storage, conventionally boxed pears generated sufficient carbon dioxide in 35 hours to raise the carbon dioxide level within the box to approximately 5 1/2%. A similar box of pears, however, packed using 5 pads according to the present invention, each of which contained 56.7 g (2 ounces) of calcium hydroxide, had an internal carbon dioxide concentration of less than 2.5% after 35 hours. The carbon dioxide concentration in the box, in fact, remained below 1% for in excess of 112 hours. At the end of 6 days the fruit packed with pads according to the present invention remained unripened even though such fruit normally would have ripened well within that time. Pads compounded to contain potassium permanganate should produce similar results.

Dispersion of the calcium chloride or other hygroscopic agent in the cushioning layer is also highly beneficial in ensuring protection of the fruit or other article. It has been found that approximately 56.7g (2 ounces) of calcium chloride absorbs sufficient moisture to cause the mascerated paper layer of a 30.48 cm x 50.8 cm (12″ x 20″) pad to swell to approximately 2 1/2 to 3 times its original volume providing enhanced cushioning and immobilisation of the fruit or other article. No moisture need be added to the pad to effect this expansion. The pad can therefore be used by packaging personnel without requiring any special training or additional labour. Such swelling of the pad results relatively rapidly once it is exposed to atmospheric humidity.

The pad of the present invention may be used in a variety of ways. Pads which contain a chemical constituent to retard ripening of produce may be used in the packaging of such produce into boxes for shipment to market from the field or after controlled atmosphere storage. In such case, the ripening of the fruit will be sufficiently delayed to provide additional shelf life or to increase additional storage time at the destination. In some instances, the retardant effect of the pad should be sufficient to permit non-refrigerated shipment of produce that would otherwise ripen excessively without refrigeration.

Such cushioning pads may also be used with a fruit destined for controlled atmosphere storage. Such produce may be shipped to the storage warehouse either in bins or in boxes. Since several days may be required to establish controlled atmosphere conditions in the storage room and since the produce may not arrive at the warehouse the same day it is harvested, the placing of the pads into the bins or boxes can aid in preserving the produce until controlled atmosphere conditions are actually established. The placing of the pad in proximity to the fruit in this matter also prevents excessive localised concentrations of carbon dioxide which may result from poor air circulation or pooling of the heavy carbon dioxide gas in the bottom of the bin or box. The level of carbon dioxide is thus maintained within acceptable limits at all times while controlled atmosphere conditions are being established. The amount of gas withdrawing chemical added to each pad, and the number of pads used per box, of course, determine the amount of carbon dioxide or other gas which can be removed from the interior of the box by the pad. For general shipping and storage, however, approximately 28.35 to 85.05 g (1 - 3 ounces) of calcium hydroxide may be added to the sized pads. Preferably however, the chemical is spread throughout the pad such that its concentration does not exceed one gram per square inch. This provides rapid absorption of the carbon dioxide in the pad without impairing cushioning properties. The number of chemical-bearing pads used in each box may also be varied according to the protection desired.

The pads may also be used once fruit has arrived at the controlled atmosphere storage warehouse. In such instances, large pads contain 510.3g to 595.35g (18 - 21 ounces) or more of calcium hydroxide and sized according to the size of bins could be used to cover bins full of fruit. In addition, pads sized approximately 18" x 40" may be used by sliding them into the stringers beneath bins which are provided to permit forklifts to pick up and move the bins. Such pads may contain 255.15g to 340.2g (9 to 12 ounces) or more of a material such as calcium hydroxide. Either type of pad may be used in conjunction with sacks of calcium hydroxide placed in the controlled atmosphere storage room. The greater surface area of the calcium hydroxide provided by these pads and the distribution throughout the room in close proximity to the fruit permitted by use of sack pads greatly aids in rapid achievement of controlled atmosphere conditions and prevention of excessive localised concentrations of carbon dioxide.

## Claims

1. A cushioning pad for protecting produce (17) comprising a gas-permeable envelope (12) containing cushioning material (11) and a chemical composition dispersed within said cushioning material said composition being capable of interacting with the atmosphere outside said envelope characterised in that said chemical composition is a solid particular material which is capable of absorbing carbon dioxide and/or ethylene from said atmosphere, said cushioning material (11) is a fibrous material and solid particles of said chemical composition are dispersed within voids in said fibrous cushioning material.

2. A cushioning pad as claimed in claim 1 wherein said cushioning material (11) includes macerated paper.

3. A cushioning pad as claimed in claim 1 or claim 2 wherein said chemical composition further includes moisture-absorbing material.

4. A cushioning pad as claimed in any preceding claim wherein said chemical composition includes calcium hydroxide and/or potassium permanganate.

5. A cushioning pad as claimed in any preceding claim wherein said cushioning material is in the form of a batt (44) and is enclosed between and immobilised by opposed sheets (13, 14) which are bonded together at their periphery and constitute said envelope (12).

6. A package comprising at least one cushioning pad as claimed in any preceding claim, which cushioning pad is in contact with a layer of produce (17) within a transportation container.

7. A package as claimed in claim 6 wherein said produce comprises apples or pears.

8. A method of making a cushioning pad for protecting produce (17) comprising the steps of forming a layer of cushioning material (11), dispersing a chemical composition in said cushioning material and enclosing said chemical composition and layer of cushioning material within a gas-permeable envelope (12), said chemical composition being capable of interacting with the atmosphere outside said envelope, characterised in that said chemical composition is a solid particulate material which is capable of absorbing carbon dioxide and/or ethylene from said atmosphere, said cushioning material (11), is a fibrous material and solid particles of said chemical composition are dispersed within voids in said fibrous cushioning material.

9. A method as claimed in claim 8 for making a plurality of cushioning pads for protecting produce (17) comprising the steps of:

providing a supply of loosely compacted fibrous cushion material (11);

providing a supply of said solid particulate chemical composition;

depositing said cushioning material from the supply thereof onto a moving conveyor means (32) to form a layer on the surface thereof and subdividing said cushioning material layer into a series of discrete cushioning pad batts (44);

transporting solid particulate chemical material from said supply across the column of cushioning pad batts so as to obtain uniform distribution of said chemical material to each cushioning pad batt in the column when dispensed thereon;

dispensing solid particles of said chemical composition at a location crosswise to the cushioning batt column onto each said cushioning pad batt seriatim and moved into the voids thereof while said cushioning pads are being moved;

controlling the dispensing of said chemical composition such that dispensing occurs only when a cushioning pad batt is being conveyed beneath the dispensing location whereby the concentration of chemical composition deposited on each batt is evenly distributed across each batt;

and further controlling the dispensing of said chemical composition such that said chemical composition is directed onto said batts and not into the spacing between adjacent batts;

providing continuous sheets of adhesive coated top and bottom gas permeable cover sheets (47, 48) adjacent the terminal end of said conveyor means;

causing the cover sheets to adhere to each cushioning pad batt and to one another about the periphery of each cushioning pad batt, whereby said chemical composition is maintained out of contact with the periphery of the adhesive coated top and bottom sheets so as not to interfere with coversheet-to-coversheet adherence and said cushion layer is completely enclosed in a gas permeable envelope with the particles of chemical composition loosely dispersed in the voids thereof.

10. Use of a cushioning pad as claimed in any of claims 1 to 5 or a package as claimed in claim 6 or claim 7 to inhibit premature ripening of produce (17) during transportation.

**Patentansprüche**

1. Pufferndes Kissen zum Schutz eines Produkts (17) mit einer gasdurchlässigen Umhüllung (12), die ein pufferndes Material (11) und eine in dem puffernden Material dispergierte chemische Zusammensetzung enthält, die mit der Atmosphäre außerhalb der Umhüllung in Wechselwirkung bringbar ist, dadurch gekennzeichnet, daß die chemische Zusammensetzung ein festes teilchenförmiges Material ist, das Kohlendioxyd und/oder Äthylen aus der Atmosphäre absorbieren kann, daß das puffernde Material (11) ein Fasermaterial ist und daß die festen Teilchen der chemischen Zusammensetzung in Hohlräumen in dem puffernden Fasermaterial fein verteilt sind.

2. Pufferndes Kissen nach Anspruch 1, bei welchem das puffernde Material (11) mazeriertes Papier aufweist.

3. Pufferndes Kissen nach Anspruch 1 oder 2, bei welchem die chemische Zusammensetzung weiterhin ein feuchtigkeitsabsorbierendes Material aufweist.

4. Pufferndes Kissen nach einem vorhergehenden Anspruch, bei welchem die chemische Zusammensetzung Kalziumhydroxyd und/oder Kaliumpermanganat aufweist.

5. Pufferndes Kissen nach einem vorhergehenden Anspruch, bei welchem das puffernde Material die Form von Watte (44) hat und zwischen gegenüberliegenden Folien (13, 14) eingeschlossen und durch sie immobilisiert ist, welche an ihrem Umfang miteinander verbunden sind und die Umhüllung (12) bilden.

6. Verpackung mit wenigstens einem puffernden Kissen nach einem vorhergehenden Anspruch, wobei das puffernde Kissen in Kontakt mit einer Schicht des Produkts (17) in einem Transportbehälter steht.

7. Verpackung nach Anspruch 6, bei welchem das Produkt aus Äpfeln oder Birnen besteht.

8. Verfahren zur Herstellung eines puffernden Kissen zum Schutz eines Produkts (17), welches die Schritte der Ausbildung einer Schicht aus pufferndem Material (11), der Feinverteilung einer chemischen Zusammensetzung in dem puffernden Material und der Umhüllung der chemischen Zusammensetzung und der Schicht aus pufferndem Material in einer gasdurchlässigen Umhüllung (12) aufweist, wobei die chemische Zusammensetzung mit der Atmosphäre außerhalb der Umhüllung in Wechselwirkung treten kann, dadurch gekennzeichnet, daß die chemische Zusammensetzung ein festes teilchenförmiges Material ist, welches Kohlendioxyd und/oder Äthylen aus der Atmosphäre absorbieren kann, daß das puffernde Material (11) ein Fasermaterial ist und daß die festen Teilchen der chemischen Zusammensetzung in den Hohlräumen in dem puffernden Fasermaterial fein verteilt sind.

9. Verfahren nach Anspruch 8 zur Herstellung einer Vielzahl von puffernden Kissen zum Schutz eines Produkts (17), welches die Schritte aufweist:

Schaffung einer Zuführung von lose kompaktiertem fasrigen Puffermaterial (11),

Schaffung einer Zuführung der festen teilchenförmigen chemischen Zusammensetzung,

Ablegen des puffernden Materials aus dessen Zuführung auf einer sich bewegenden Fördereinrichtung (32) zur Bildung einer Schicht auf deren Oberfläche und Unterteilung der puffernden Materialschicht in eine Reihe von gesonderten puffernden Wattekissen (44);

Transportieren des festen teilchenförmigen chemischen Materials von der Zufuhr quer über die Kolonne von puffernden Wattekissen, um so eine gleichförmige Verteilung des chemischen Materials für jedes puffernde Wattekissen in der Kolonne zu erhalten, wenn es darauf verteilt wird,

Verteilen fester Teilchen der chemischen Zusammensetzung an einer Stelle quer zu der puffernden Wattekolonne auf jedem puffernden Wattekissen der Reihe nach und Bewegen in Hohlräume, während die puffernden Kissen bewegt werden,

Steuern der Verteilung der chemischen Zusammensetzung derart, daß die Verteilung nur erfolgt, wenn ein pufferndes Wattekissen unter der Verteilungsstelle gefördert wird, wodurch die Konzentration der auf jedem Kissen abgeschiedenen chemischen Zusammensetzung gleichförmig quer über jedes Wattekissen verteilt ist,

Weitere Steuerung· der Verteilung der chemischen Zusammensetzung derart, daß die chemische Zusammensetzung auf die Wattekissen und nicht in den Abstand zwischen benachbarten Kissen gerichtet wird,

Vorsehen kontinuierlicher Bahnen von mit Klebstoff beschichteten oberen und unteren gasdurchlässigen Deckfolien (47, 48) angrenzend an das Abschlußende der Fördereinrichtung; und

Veranlassen der Abdeckfolien, daß sie an jedem pufferndem Wattekissen und aneinander um den Umfang eines jeden puffernden Wattekissens herum haften, wodurch die chemische Zusammensetzung außer Kontakt mit dem Umfang der mit Klebstoff beschichteten oberen und unteren Folien gehalten wird, so daß sie die Haftung von Abdeckfolie an Abdeckfolie nicht beeinträchtigt und die Kissenschicht vollständig in einer gasdurchlässigen Umhüllung eingeschlossen ist, wobei die Teilchen der chemischen Zusammensetzung in den Hohlräumen der Schicht lose fein verteilt sind.

10. Verwendung eines puffernden Kissens nach einem der Ansprüche 1 bis 5 oder einer Verpakkung nach Anspruch 6 oder Anspruch 7 zur Unterbindung eines vorzeitigen Reifens des Produkts (17) während des Transports.

## Revendications

1. Coussin de capitonnage pour protéger un produit (17) comprenant une enveloppe (12) perméable aux gaz contenant un matériau de capitonnage (11) et une composition chimique dispersée à l'intérieur dudit matériau de capitonnage, ladite composition étant capable de réagir avec l'atmosphère extérieure à ladite enveloppe, caractérisé en ce que ladite composition chimique est un matériau solide se presentant sous la forme de particules qui est susceptible d'absorber le gaz carbonique et/ou l'éthylène de ladite atmosphère, ledit matériau de capitonnage (11) est un matériau fibreux et les particules solides de ladite composition chimique sont dispersées à l'intérieur des espaces vides dudit matériau de capitonnage fibreux.

2. Coussin de capitonnage tel que revendiqué dans la revendication 1 dans lequel ledit matériau de capitonnage (11) comporte en papier macéré.

3. Coussin de capitonnage tel que revendiqué dans la revendication 1 ou la revendication 2 dans lequel ladite composition chimique comporte en outre un matériau absorbant l'humidité.

4. Coussin de capitonnage tel que revendiqué dans l'une quelconque des revendications précédentes dans lequel ladite composition chimique comporte de l'hydroxyde de calcium et/ou du permanganate de potassium.

5. Coussin de capitonnage tel que revendiqué dans l'une quelconque des revendications précédentes dans lequel ledit matériau de capitonnage se présente sous la forme d'un coussinet (44) et se trouve enfermé entre et immobilisé par des feuilles opposées (13, 14) qui sont reliées l'une à l'autre à leur périphérie et constituent ladite enveloppe (12).

6. Emballage comportant au moins un coussin de capitonnage tel que revendiqué dans l'une quelconque des revendications précédentes, lequel coussin de capitonnage est en contact avec une couche du produit (17) à l'intérieur d'un conteneur de transport.

7. Emballage tel que revendiqué dans la revendication 6, dans lequel ledit produit comprend des pommes ou des poires.

8. Procédé pour fabriquer un coussin de capitonnage pour la protection d'un produit (17) comportant les phases consistant à former une couche de matériau de capitonnage (11), à disperser une composition chimique dans ledit matériau de capitonnage et à enfermer ladite composition chimique et la couche de matériau de capitonnage à l'intérieur d'une enveloppe (12) perméable aux gaz, ladite composition chimique étant susceptible d'agir avec l'atmosphère extérieure à ladite enveloppe, caratérisé en ce que la composition chimique consiste en un matériau solide se presentant sous forme de particules qui est susceptible d'absorber le gaz carbonique et/ou l'éthylène de ladite atmosphère, ledit matériau de capitonnage (11) est un matériau fibreux et les particules solides de ladite composition chimique sont dispersées à l'intérieur des espaces vides dudit matériau de capitonnage fibreux.

9. Procédé tel que revendiqué dans la revendication 8 pour fabriquer un ensemble de coussins de capitonnage en vue de protéger un produit (17) comprenant les phases suivantes:

on prévoit une alimentation en matériau (11) de capitonnage fibreux compacté sans excès;

on prévoit une alimentation de ladite composition chimique se présentant sous la forme de particules solides;

on dépose ledit matériau de capitonnage provenant de l'alimentation de ce dernier sur des moyens formant convoyeur (32) se déplaçant pour constituer une couche sur la surface de celui-ci et on subdivise ladite couche de matériau de capitonnage sous la forme d'une série de coussinets élémentaires de capitonnage distincts des uns des autres (44);

on transporte le matériau chimique se présentant sous forme de particules solides de ladite alimentation à travers la colonne de coussinets de telle sorte qu'on obtient une distribution uniforme dudit matériau chimique vers chacun desdits coussinets dans la colonne lorsqu'on distribue le matériau chimique sur celle-ci;

on distribue des particules solides de ladite composition chimique à un endroit transversal par rapport à la colonne de coussinets vers chacun de ces derniers successivement et lors de leur déplacement à l'intérieur des espaces vides de ces derniers, tout en déplaçant lesdits coussins de capitonnage;

on contrôle la distribution de ladite composition chimique de telle sorte que la distribution se produise seulement lorsqu'un coussinet se trouve convoyé en dessous de l'emplacement de distribution de telle sorte que la concentration en composition chimique déposée régulièrement sur chaque coussinet soit distribuée à travers chaque coussinet;

et on contrôle en outre la distribution de ladite composition chimique de telle sorte que ladite composition chimique soit dirigée vers lesdits coussinets et non pas à l'intérieur des espacements existant entre coussinets adjacents;

on fournit des feuilles continues de feuilles de couverture perméables aux gaz (47, 48) revêtues de colle sur leurs faces supérieure et inférieure, lesdites feuilles étant disposées adjacentes à l'extrémité desdits moyens formant convoyeur;

on amène les feuilles de couverture pour les coller sur chaque coussinet de capitonnage et entre-elles autour de la périphérie de chaque coussinet, de telle sorte que la composition chimique soit maintenue hors de contact par rapport à la périphérie des feuilles revêtues de colle supérieure et inférieure de façon à ne pas interférer avec l'adhérence entre feuilles de couverture et afin que la couche de capitonnage soit complètement enfermée dans une enveloppe perméable aux gaz avec les particules de la composition chimique dispersées sans tassement dans les espaces vides de cette dernière.

10. Utilisation d'un coussin de capitonnage tel que revendiqué dans l'une quelconque des revendications 1 à 5 ou d'un emballage tel que revendiqué dans la revendication 6 ou la revendication 7 pour empêcher le mûrissage prématuré du produit (17) au cours du transport.

EP 0 138 545 B1

# FIG. 1

# FIG. 2

FIG. 3

2

EP 0 138 545 B1

FIG. 9

FIG. 4

3

FIG. 5

FIG. 6

FIG. 7

FIG. 8

FIG. 10

136

135a

191

140a

192

FIG. 11

192
203
206
201
207
213
194
198
152

205
202
199
204
213
196

197 198
156

FIG. 12

212
208
201
211

199
209
196

205
206
212
201
208
193
213
204
197
196
209
194
156
152

11

12

12

11